# EUROPEAN PATENT APPLICATION

(11) **EP 2 642 361 A2**
(43) Date of publication of application: **25.09.2013**
(21) Application number: 13150595.0
(22) Date of filing: 09.01.2013
(51) Int. Cl.: G05B 19/406

(54) **Machining state information displaying device**

(30) Priority: 19.03.2012 JP 2012062113
(71) Applicant: FANUC CORPORATION, Oshino-mura Minamitsuru-gun Yamanashi 401-0597 (JP)
(72) Inventor: Kudou, Takehiro, Minamitsuru-gun, Yamanashi 401-0597 (JP); Suzuki, Koji, Minamitsuru-gun, Yamanashi 401-0597 (JP)
(74) Representative: Ward, James Norman

(57) **Abstract**

A displaying device of machining state information displays machining state information in a 3D graph along with a machining trajectory. An arbitrary section of the machining trajectory displayed in the 3D graph is designated on a screen and machining state information in the designated section is displayed in a 2D graph. When the machining fault is determined in the machining state information displayed in the 2D graph, the display format is changed to a display format indicating the machining fault.

## Description

### BACKGROUND OF THE INVENTION

### 1. Field of the Invention

The present invention relates to a machining state information displaying device that detects machining state information representing a machining state during machining and a machining position corresponding to the machining state information, displays a machining trajectory on a display unit based on the detected machining position, and displays the machining state information by a 3D graph along with the machining trajectory.

### 2. Description of the Related Art

Industrial machining machines perform a machining process to a shape which satisfies desired machining precision by applying physical, electrical, and chemical actions to a metal workpiece configured by, for example, tool steel and gradually changing the shape of the metal workpiece. Herein, when the machining precision is poor, a cause of the poor machining precision may be specified by analyzing the machining state information during machining. For example, in wire electro-discharge machining, the machining state information includes a discharge frequency, a valid discharge pulse number, an invalid discharge pulse number, mean machining current, mean gap voltage, wire tension, a machining speed and the like. In general, an operator, standing by a machine, monitors and records the machining state information during machining, and the poor machining precision is analyzed based on the machining result and the recorded machining state information. However, in this method, a large amount of labor is required for an analysis operation and an efficiency is poor.

In this regard, Japanese Patent Application Laid-Open No. 11-224116 discloses an example in which real machining values such as the machining speed, machining reaction force and the like are detected by a detector and the detected real machining values at respective machining positions are displayed in 3D on a screen by providing display formats corresponding to the real machining values.

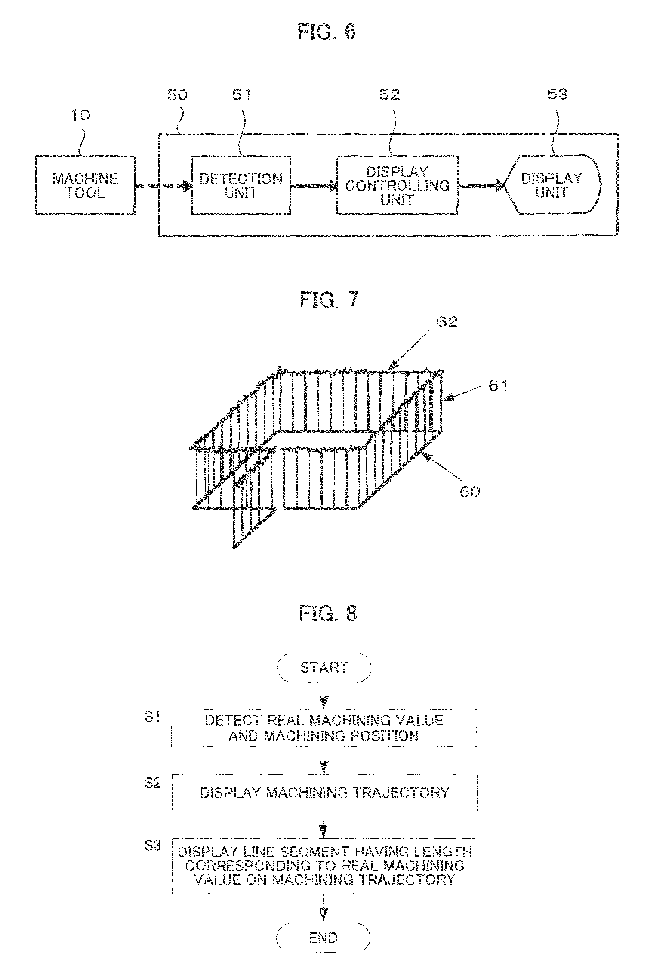

FIG. 6 is a diagram illustrating a machining information displaying device according to prior art. FIG. 7 is a display example of machining trajectories and real machining values displayed by a displaying device of the machining information displaying device according to prior art.

A machining information displaying device 50 includes a detection unit 51, a display control unit 52, and a display unit 53. The detection unit 51 detects real machining values such as a machining speed, machining reaction force and the like during machining by a machine tool 10, and machining positions corresponding to the real machining values. The display unit 53 displays machining trajectories 60. The display control unit 52 controls a line segment having a length corresponding to the real machining values such as the machining speed, the machining reaction force and the like at the respective machining positions detected by the detection unit 51 to be displayed in 3D on the machining trajectories 60 displayed by the display unit 53.

The machining trajectories 60 may be acquired from a machining program or may be calculated from data regarding the machining positions detected by the detection unit 51, and in the latter case, the machining trajectory by the real machining position is displayed on the screen. Reference numeral 61 of FIG. 7 represents perpendicular lines indicating the real machining values on the machining trajectories 60 and reference numeral 62 represents ridge lines connecting apexes of the perpendicular lines 61. Therefore, the real machining values are displayed in 3D on the screen in a wire frame format.

FIG. 8 is a flowchart illustrating a process of displaying a line segment having a length corresponding to a real machining value on a machining trajectory, according to prior art.

The real machining values such as the machining speed, the machining reaction force and the like during machining, and the machining positions corresponding to the real machining values are detected (step S1), the machining trajectories are displayed on the display unit based on the detected data (step S2), and the line segment having the length corresponding to the detected real machining value is displayed in 3D on the displayed machining trajectory (step S3).

However, according to the conventional display method, when there is not shown a particular large change in the real machining value displayed on the screen of the display unit, there is a need to verify a detailed change by changing a display magnification of the real machining value or observe a state of a machined object after machining is terminated, as a result, time and efforts are required to specify a site which causes the poor machining precision.

### SUMMARY OF THE INVENTION

Accordingly, the present invention has been made in an effort to provide a machining state information displaying device that can intuitively analyze an occurrence portion of the poor machining precision in a short time and analyze the machining state, thereby shortening a time required for analyzing the poor machining precision, and improve productivity.

A machining state information displaying device according to the present invention detects machining state information configured by a plurality of signals or physical amounts indicating a machining state during machining and a machining position corresponding to the machining state information, displays a machining trajectory on a display unit based on the machining position, and displays one or more machining state information at the machining position in a 3D graph along with the machining trajectory.

A first aspect of the machining state information displaying device includes: a section designation unit configured to designate an arbitrary section on the machining trajectory or the 3D graph; a display unit configured to display machining state information in the section designated by the section designation unit in a 2D graph or a table; a designated section moving unit configured to move the section designated by the section designation unit on the machining trajectory or the 3D graph; and a display updating unit configured to change the values of the 2D graph or the table in conjunction with the movement of the designated section by the designated section moving unit.

The machining state information displaying device may further include a display format changing unit configured to determine whether the machining state is good or poor by comparing the machining state information with machining state information which is stored in advance and serves as a reference for determining whether the machining state is good or poor, and change a display format of the machining information indicating a machining fault in the machining state information displayed by the display unit to a format indicating the machining fault if a result of the determination indicates that the machining state is poor.

A second aspect of the machining state information displaying device includes: a position designation unit configured to designate an arbitrary position on the machining trajectory or the 3D graph; a display unit configured to display machining state information at a position designated by the position designation unit; a designated position moving unit configured to move the position designated by the position designation unit on the machining trajectory or the 3D graph; and a display updating unit configured to change the value of the machining state information in conjunction with the movement of the designated position by the designated position moving unit.

The machining state information displaying device may further include a display format changing unit configured to determine whether the machining state is good or poor by comparing the machining state information with machining state information which is stored in advance and serves as a reference for determining whether the machining state is good or poor, and change a display format of the machining information displayed by the display unit to a display format indicating a machining state fault if a result of the determination indicates that the machining state is poor.

According to the present invention, since an occurrence portion of the poor machining precision can be intuitively identified in a short time and the machining state can be analyzed, it is possible to provide a machining state information displaying device capable of reducing a time required for analyzing the poor machining precision and promoting productivity.

### BRIEF DESCRIPTION OF THE DRAWINGS

The forgoing and other objects and feature of the invention will be apparent from the following description of preferred embodiments of the invention with reference to the accompanying drawings, in which:
FIG. 1 is a block diagram illustrating a configuration of an embodiment of a machining state displaying device according to the present invention;
FIGS. 2A and 2B are examples of machining trajectories and machining information displayed by a display unit in the machining state displaying device of FIG. 1;
FIGS. 3A and 3B are display examples by a 2D graph of machining state information indicating a machining fault, which is displayed by a display unit 24 of FIG. 1;
FIG. 4 is a flowchart illustrating a first example of machining state information display processing executed by the machining state information displaying device of the present invention;
FIG. 5 is a flowchart illustrating a second example of machining state information display processing executed by the machining state information displaying device of the present invention;
FIG. 6 is a diagram illustrating a conventional machining information displaying device;
FIG. 7 is a display example of machining trajectories and real machining values displayed by a display device of the machining information displaying device according to prior art; and
FIG. 8 is a flowchart illustrating a conventional process of displaying a line segment having a length corresponding to a real machining value on a machining trajectory.

### DETAILED DESCRIPTION OF THE PREFERRED EMBODIMENTS

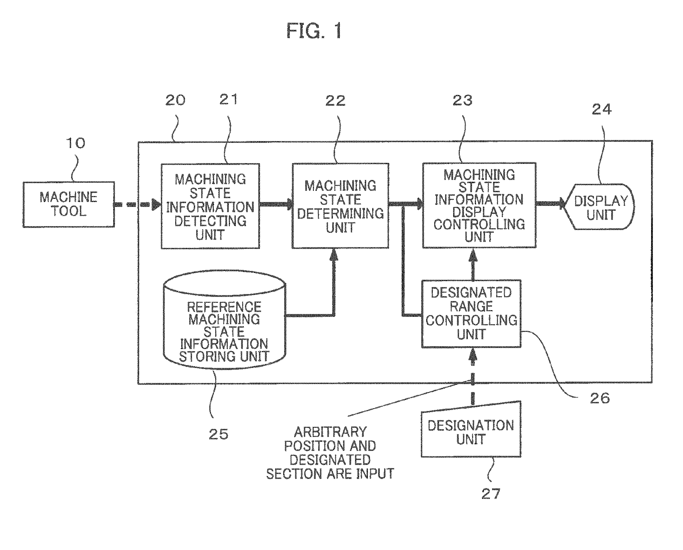

An embodiment of a machining state displaying device according to the present invention will be described with reference to FIG. 1.

In a machining state information displaying device 20, a machining state information detecting unit 21 detects machining state information configured by a plurality of signals or physical amounts indicating a machining state during machining and a machining position corresponding to the machining state information. The machining state information is data acquired by sampling various signals or physical amounts outputted to the machining state information displaying device 20 from various sensors attached to a machine tool 10 every sampling time. Further, the machining position is acquired from a position detection signal which is fed back from a position detector (not illustrated) embedded in a servo motor (not illustrated) attached to the machine tool 10.

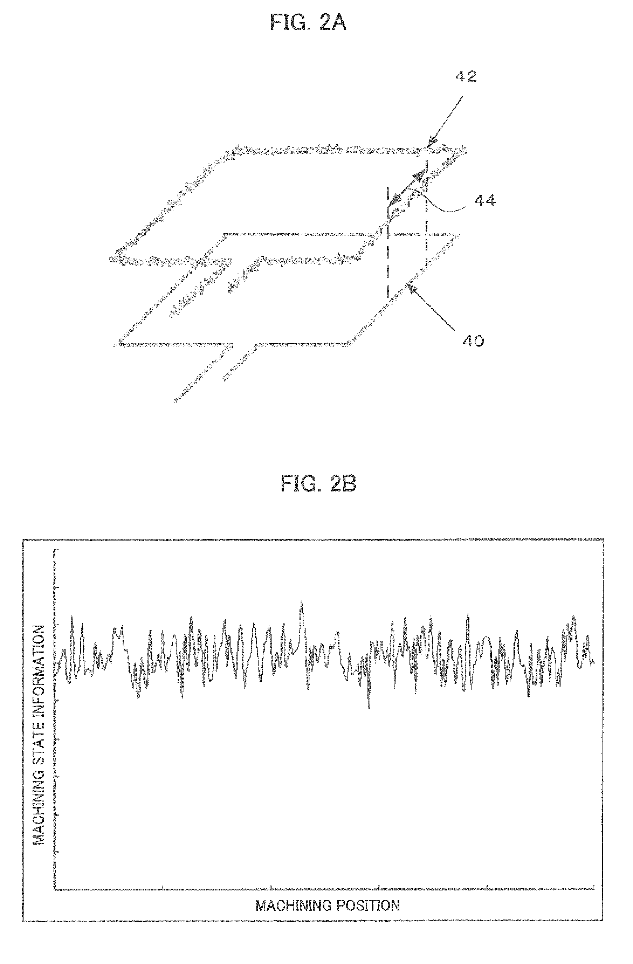

A machining state determining unit 22 determines whether the machining state is good or poor by comparing the machining state information detected by the machining state information detecting unit 21 with reference machining state information which is a reference for determining whether the machining state is good or poor, which is stored in a reference machining state information storing unit 25 in advance. A machining state information display controlling unit 23 displays a machining trajectory on a display unit 24 based on the machining position corresponding to the machining state information and further, displays the machining state information during machining, which is detected by the machining state information detecting unit 21, in a 3D graph along with the machining trajectory displayed on the display unit 24. A designated range display controlling unit 26 displays the machining state information at an arbitrary position or a designated section of the machining trajectory on the 3D graph input from a designation unit 27 on the display unit 24 in a 2D graph or a table. The section designated by the designation unit 27 is displayed overlapped with the machining trajectory or the 3D graph as illustrated in FIG. 2A and further, the displayed section may be moved on the machining trajectory or the 3D graph by receiving a command of section movement from the designation unit 27.

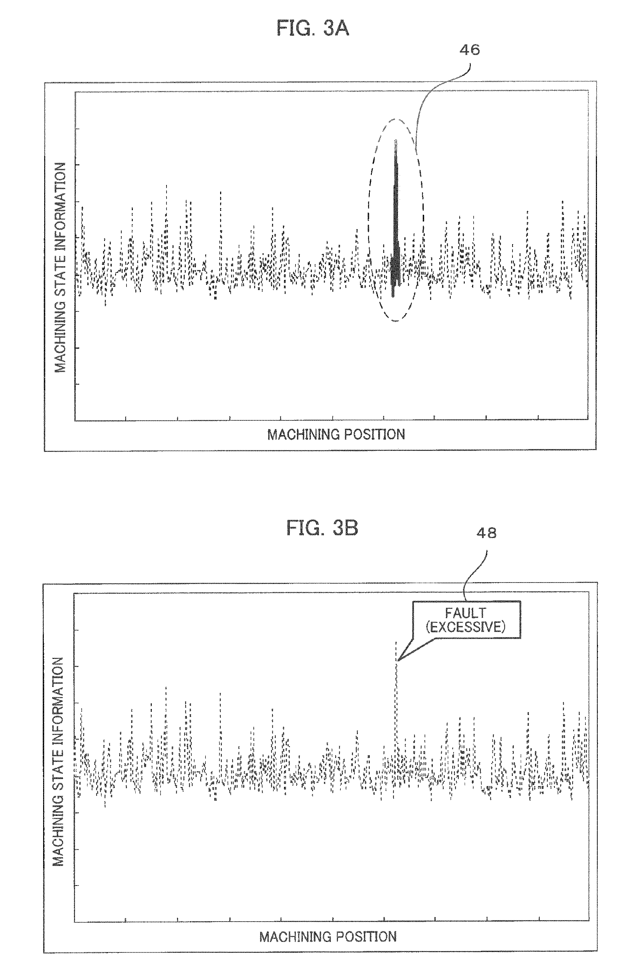

FIGS. 2A and 2B are examples of machining trajectories and machining information displayed by the display unit 24 of FIG. 1. FIGS. 3A and 3B are display examples by a 2D graph of machining state information indicating a machining fault, which is displayed by the display unit 24 of FIG. 1. The machining state information display controlling unit 23 displays the machining position corresponding to the machining state information during machining, which is detected by the machining state information detecting unit 21, on the display unit 24 as a machining trajectory 40, as illustrated in FIG. 2A and further, displays machining state information at one or more machining positions along with the machining trajectory 40 in the 3D graph format as represented by reference numeral 42 of FIG. 2A.

The designated range display controlling unit 26 sets information on a position or a section on the machining trajectory 40 or the 3D graph 42, which is designated by the designation unit 27, on a screen of the display unit 24 in a 2D graph format having a vertical axis indicating the machining state information and a horizontal axis indicating the machining position of the machining state information, as illustrated in FIG. 2B. In addition, with the designation of the position or section in the designation unit 27, a designated section 44 moves on the 3D graph 42 of FIG. 2A, and as a result, the section of the machining state information displayed in the 2D graph illustrated in FIG. 2B also moves in conjunction with the movement of the designated section 44 on the 3D graph 42.

Further, when the machining state determining unit 22 determines that the machining state is poor based on the machining state information, a display format may be changed by a color or a line type, a change in line thickness (see FIG. 3A), or display of letters (see FIG. 3B) of the machining state information indicating the machining fault on the 3D and 2D graphs. Reference numeral 46 of FIG. 3A represents an example of displaying that the machining fault occurs at a certain machining position by deepening the color. Further, reference numeral 48 of FIG. 3B represents an example of displaying that an (excessive) machining fault occurs at a certain machining position by 'poor (excessive)' letters overlapped with the machining state information.

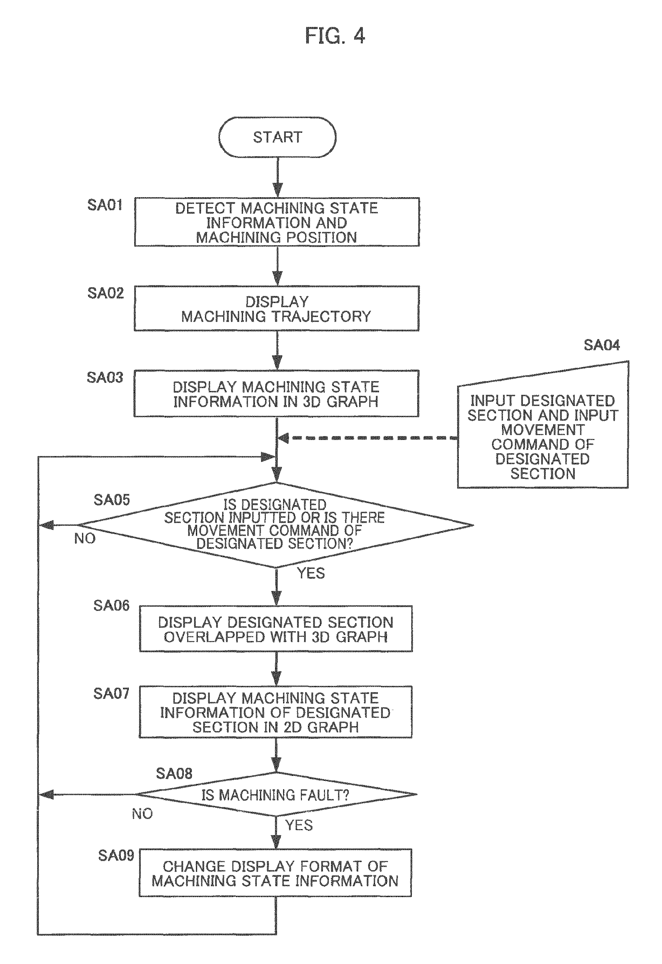

FIG. 4 is a flowchart illustrating a first example of machining state information display processing executed by the machining state information displaying device of the present invention. In this machining state information display processing, designation of the section is performed by inputting. Herein, the machining state information display processing will be described according to each step.
[Step SA01 The machining state information such as the machining speed or the machining reaction force and the like during machining and the machining position corresponding to the machining state information are detected.
[Step SA02] The detected machining position corresponding to the machining state information is displayed on the display unit as the machining trajectory.
[Step SA03] The machining state information at the machining position is displayed in the 3D graph along with the displayed machining trajectory.
[Step SA04] An arbitrary section on the display of the machining trajectory or the machining state information is input as a designated section or a movement command to move the designated section is input.
[Step SA05] It is determined whether or not the designated section is input or whether or not there is the movement command of the designated section, and if the designated section is input or when there is the movement command of the designated section (YES), the process proceeds to step SA06, whereas if not, the process waits until the designated section is input or there is the movement command of the designated section. In this step, by monitoring the input of the designated section or the input of the movement command of the designated section in step SA04, the 2D graph may be moved in conjunction with the movement of the designated section.
[Step SA06] The designated section input in step SA04 is displayed overlapped with the machining trajectory or the 3D graph displayed in step SA03. In addition, the designated section is moved on the machining trajectory or the 3D graph in conjunction with the movement command of the designated section, which is input in step SA04. As a result, the designated section of the machining trajectory or the 3D graph designated by the designation unit 27 may be continuously moved on the display screen.
[Step SA07] The machining state information in an arbitrary designated section designated in step SA04 is displayed in the 2D graph having a horizontal axis indicating the machining position and a vertical axis indicating the machining state information.
[Step SA08] It is determined whether the machining state is good or poor by comparing the machining state information detected in step SA01 with a reference machining state information which is stored in advance and serves as reference to determine whether the machining state is good or poor, and when it is determined that the machining state is poor (YES), the process proceeds to step SA09, whereas when it is determined that the machining state is not poor (NO), the process returns to step SA05 and the machining is continued.
[Step SA09] In the machining state information displayed by the processing of step SA07, the display format of the machining state information indicating the machining fault is changed to a display format indicating the machining fault, and the process proceeds to step SA05 and the processing is continued.

The machining state information may be displayed in a table format instead of displaying the machining state information by the 2D graph in step SA07.

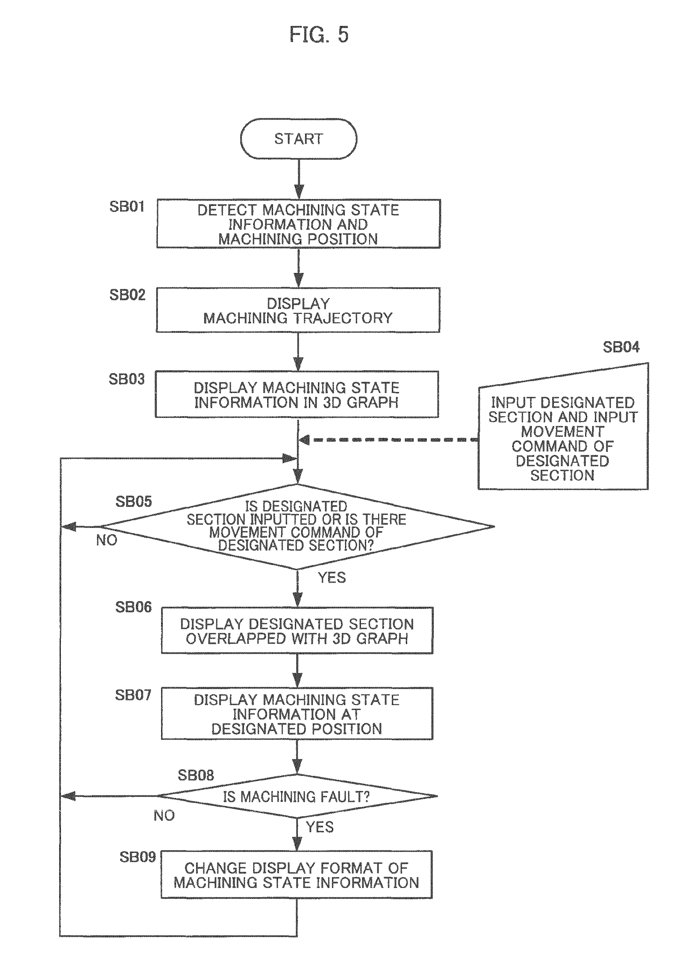

FIG. 5 is a flowchart illustrating a second example of machining state information display processing executed by the machining state information displaying device of the present invention. In the machining state information display processing, when the predetermined position is designated by the designation unit 27 of FIG. 1, the designated range display controlling unit 26 displays the machining state information corresponding to the position input from the designation unit 27 on the display unit 24. Herein, the machining state information display processing will be described according to each step.
[Step SB01] The machining state information such as the machining speed or the machining reaction force and the like during machining and the machining position corresponding to the machining state information are detected.
[Step SB02] The detected machining position corresponding to the machining state information is displayed on the display unit as the machining trajectory.
[Step SB03] The machining state information at the machining position is displayed in the 3D graph along with the displayed machining trajectory.
[Step SB04] An arbitrary position on the display of the machining trajectory or the machining state information is input as a designated position or a movement command to move the designated position is input.
[Step SB05] It is determined whether or not the designated position is input or whether or not there is the movement command of the designated position, and if the designated position is input or when there is the movement command of the designated position (YES), the process proceeds to step SB06, whereas if not, the process waits until the designated position is input or there is the movement command of the designated position. In this step, by monitoring the input of the designated position or the input of the movement command of the designated position in step SB04, the machining state information corresponding to the designated position may be changed and displayed in conjunction with the movement of the designated position.
[Step SB06] The designated position input in step SB04 is displayed overlapped with the machining trajectory or the 3D graph displayed in step SB03. In addition, the designated position is moved on the machining trajectory or the 3D graph in conjunction with the movement command of the designated position, which is input in step SB04. As a result, the designated position of the machining trajectory or the 3D graph designated by the designation unit 27 may be continuously moved on the display screen.
[Step SB07] The machining state information at the predetermined designated position designated in step SB04 is displayed on the display screen of the display unit.
[Step SB08] It is determined whether the machining state is good or poor by comparing the machining state information detected in step SB01 with the reference machining state information which is stored in advance and serves as a reference to determine whether the machining state is good or poor, and when it is determined that the machining state is poor (YES), the process proceeds to step SB09, whereas when it is determine that the machining state is not poor (NO), the process returns to step SB05 and the processing is continued.
[Step SB09] The display format of the machining state information displayed on the display screen by the processing of step SB07 is changed to a display format indicating the machining fault and the process returns to step SB05 and the processing is continued.

As described above, an occurrence portion of the poor machining precision can be intuitively identified in a short time and the machining state can be analyzed, and thus time required for analyzing the poor machining precision can be shortened and productivity can be improved. Further, a case in which this configuration is independent from the machine tool is described, but the same effect can be acquired even when this configuration is mounted on the machine tool.

## Claims

1. A machining state information displaying device which detects machining state information configured by a plurality of signals or physical amounts indicating a machining state during machining and a machining position corresponding to the machining state information, displays a machining trajectory on a display unit based on the machining position, and displays one or more machining state information at the machining position in a 3D graph along with the machining trajectory, the device comprising:
a section designation unit configured to designate an arbitrary section on the machining trajectory or the 3D graph;
a display unit configured to display machining state information in the section designated by the section designation unit in a 2D graph or a table;
a designated section moving unit configured to move the section designated by the section designation unit on the machining trajectory or the 3D graph; and
a display updating unit configured to change the values of the 2D graph or the table in conjunction with the movement of the designated section by the designated section moving unit.

2. The machining state information displaying device according to claim 1, further comprising:
a display format changing unit configured to determine whether the machining state is good or poor by comparing the machining state information with machining state information which is stored in advance and serves as a reference for determining whether the machining state is good or poor, and change a display format of the machining information indicating a machining fault in the machining state information displayed by the display unit to a format indicating the machining fault if a result of the determination indicates that the machining state is poor.

3. A machining state information displaying device which detects machining state information configured by a plurality of signals or physical amounts indicating a machining state during machining and a machining position corresponding to the machining state information, displays a machining trajectory on a display unit based on the machining position, and displays one or more machining state information at the machining position in a 3D graph along with the machining trajectory, the device comprising:
a position designation unit configured to designate an arbitrary position on the machining trajectory or the 3D graph;
a display unit configured to display machining state information at a position designated by the position designation unit;
a designated position moving unit configured to move the position designated by the position designation unit on the machining trajectory or the 3D graph; and
a display updating unit configured to change the value of the machining state information in conjunction with the movement of the designated position by the designated position moving unit.

4. The machining state information displaying device according to claim 3, further comprising:
a display format changing unit configured to determine whether the machining state is good or poor by comparing the machining state information with machining state information which is stored in advance and serves as a reference for determining whether the machining state is good or poor, and change a display format of the machining information displayed by the display unit to a display format indicating a machining state fault if a result of the determination indicates that the machining state is poor.
